# EUROPÄISCHE PATENTSCHRIFT

(11) **EP 3 586 390 B1**
(45) Veröffentlichungstag und Bekanntmachung des Hinweises auf die Patenterteilung: **09.06.2021**
(21) Anmeldenummer: 18706465.4
(22) Anmeldetag: 15.02.2018
(51) Int. Cl.: H01M 8/0612, H01M 8/04089, H01M 8/0438, H01M 8/04746

(54) **BRENNSTOFFZELLENVORRICHTUNG**
FUEL CELL DEVICE
DISPOSITIF DE PILE À COMBUSTIBLE

(30) Priorität: 23.02.2017 DE 102017202904
(43) Veröffentlichungstag der Anmeldung: 01.01.2020
(73) Patentinhaber: Robert Bosch GmbH, 70442 Stuttgart (DE)
(72) Erfinder: HERING, Martin, 71067 Sindelfingen (DE); WAHL, Stefanie, 71691 Freiberg Am Neckar (DE)
(86) Internationale Anmeldenummer: PCT/EP2018/053746
(87) Internationale Veröffentlichungsnummer: WO 2018/153765

(56) Entgegenhaltungen:
- EP-A1- 2 131 434
- DE-A1-102011 088 120
- US-A1- 2014 065 499

## Beschreibung

### Stand der Technik

Es ist bereits eine Brennstoffzellenvorrichtung, welche dazu vorgesehen ist, mit einem Erdgas betrieben zu werden, mit einer Brennstoffzelleneinheit und mit einer Reformereinheit, welche dazu vorgesehen ist, das Erdgas zumindest teilweise zu reformieren, vorgeschlagen worden. Aus der Offenlegungsschrift US 2014/065499 ist eine Brennstoffzellenvorrichtung und ein Verfahren zum Betreiben einer Brennstoffzellenvorrichtung bekannt, welche dazu vorgesehen ist, mit Erdgas betrieben zu werden.

### Offenbarung der Erfindung

Die Erfindung geht aus von einer Brennstoffzellenvorrichtung, welche dazu vorgesehen ist, mit einem Erdgas betrieben zu werden, mit einer Brennstoffzelleneinheit und mit einer Reformereinheit, welche dazu vorgesehen ist, das Erdgas zumindest teilweise zu reformieren.

Es wird vorgeschlagen, dass die Brennstoffzellenvorrichtung eine Regeleinheit aufweist, welche zumindest dazu vorgesehen ist, einen Eintrittsvolumenstrom und/oder Eintrittsmassenstrom des Erdgases in Abhängigkeit von zumindest einem Volumenstrom und/oder Massenstrom an einem Ausgang der Reformereinheit und/oder zumindest einem Volumenstrom und/oder Massenstrom an einem Anodenausgang der Brennstoffzelleneinheit zu regeln.

Unter einer "Brennstoffzellenvorrichtung" soll in diesem Zusammenhang insbesondere ein, insbesondere funktionstüchtiger, Bestandteil, insbesondere eine Konstruktions- und/oder Funktionskomponente, eines Brennstoffzellensystems verstanden werden. Unter einem "Brennstoffzellensystem" soll in diesem Zusammenhang insbesondere ein System zu einer stationären und/oder mobilen Gewinnung insbesondere elektrischer und/oder thermischer Energie unter Verwendung zumindest einer Brennstoffzelleneinheit verstanden werden. Unter einer "Brennstoffzelleneinheit" soll in diesem Zusammenhang insbesondere eine Einheit mit zumindest einer Brennstoffzelle verstanden werden, welche dazu vorgesehen ist, zumindest eine chemische Reaktionsenergie zumindest eines, insbesondere kontinuierlich zugeführten, Brenngases, insbesondere Wasserstoff, und zumindest eines Oxidationsmittels, insbesondere Sauerstoff, insbesondere in elektrische Energie umzuwandeln. Die zumindest eine Brennstoffzelle kann insbesondere als Festoxid-Brennstoffzelle (SOFC) ausgebildet sein. Vorzugsweise umfasst die zumindest eine Brennstoffzelleneinheit eine Vielzahl von Brennstoffzellen, welche insbesondere in einem Brennstoffzellenstack angeordnet sind. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einem "Erdgas" soll in diesem Zusammenhang insbesondere ein Gas und/oder Gasgemisch, insbesondere ein Naturgasgemisch, verstanden werden, welches zumindest ein Alkan, insbesondere Methan, Ethan, Propan und/oder Butan, umfasst. Ferner kann das Erdgas weitere Bestandteile aufweisen, wie insbesondere Kohlenstoffdioxid und/oder Stickstoff und/oder Sauerstoff und/oder Schwefelverbindungen. Alternativ oder zusätzlich ist es denkbar, die Brennstoffzellenvorrichtung mit einem anderen insbesondere gasförmigen Brennstoff und/oder flüssigen Brennstoff, beispielsweise LPG, Benzin oder Diesel, zu betreiben. Unter einer "Reformereinheit" soll in diesem Zusammenhang insbesondere eine chemisch-technische Einheit zu zumindest einer Aufbereitung zumindest eines kohlenwasserstoffhaltigen Brennstoffs, insbesondere des Erdgases, insbesondere durch eine Dampfreformierung, durch eine partielle Oxidation, durch eine autotherme Reformierung und/oder durch eine Kombination einer Dampfreformierung mit einer CO₂-Trockenreformierung, insbesondere zur Gewinnung des zumindest einen Brenngases, insbesondere Wasserstoff, und/oder zum Aufbrechen höherkettiger Alkene verstanden werden. Vorzugsweise ist die Reformereinheit zumindest teilweise als Dampfreformereinheit ausgebildet. Unter einer "Regeleinheit" soll insbesondere eine Einheit mit zumindest einer Regelelektronik verstanden werden. Unter einer "Regelelektronik" soll insbesondere eine Einheit mit einer Prozessoreinheit und mit einer Speichereinheit sowie mit einem in der Speichereinheit gespeicherten Betriebsprogramm verstanden werden. Insbesondere ist die Regeleinheit dazu vorgesehen einen Eintrittsvolumenstrom und/oder Eintrittsmassenstrom des Erdgases zur zumindest weitgehenden Kompensation von Schwankungen einer Erdgaszusammensetzung in Abhängigkeit von zumindest einem Volumenstrom und/oder Massenstrom an einem Ausgang der Reformereinheit und/oder zumindest einem Volumenstrom und/oder Massenstrom an einem Anodenausgang der Brennstoffzelleneinheit zu regeln. Die Erdgaszusammensetzung, insbesondere in Deutschland bzw. Europa, ist deutlichen zeitlichen sowie örtlichen Schwankungen unterworfen. Beim Endkunden ergeben sich je nach Herkunft des zugeführten Erdgases und deren Mischung im Netz schwankende Zusammensetzungen. Die Richtlinie DVGW 2012 zeigt unterschiedliche Durchschnittskonzentrationen von typischen Erdgasen der Kategorien H (hochkalorisch) und L (niederkalorisch). Diese Gase unterscheiden sich nicht nur im Energiegehalt sondern auch in den Konzentrationen der einzelnen Spezies. Die Regelung des Eintrittsvolumenstroms und/oder Eintrittsmassenstroms des Erdgases mittels der Regeleinheit ist mit zumindest einem Volumenstrom und/oder Massenstrom an einem Ausgang der Reformereinheit und/oder zumindest einem Volumenstrom und/oder Massenstrom an einem Anodenausgang der Brennstoffzelleneinheit gekoppelt. Vorzugsweise ist die Regeleinheit dazu vorgesehen, den Eintrittsvolumenstrom und/oder Eintrittsmassenstrom des Erdgases derart zu regeln, dass der Volumenstrom und/oder Massenstrom am Ausgang der Reformereinheit und/oder der Volumenstrom und/oder Massenstrom am Anodenausgang der Brennstoffzelleneinheit zumindest im Wesentlichen konstant ist. Für eine definierte Erdgaszusammensetzung sind jeweils Referenzwerte für den Volumenstrom und/oder Massenstrom am Ausgang der Reformereinheit und/oder für den Volumenstrom und/oder Massenstrom an einem Anodenausgang der Brennstoffzelleneinheit in Abhängigkeit einer Temperatur der Reformereinheit und/oder einer Temperatur der Brennstoffzelleneinheit definierbar. Die Referenzwerte sind insbesondere in einer Speichereinheit der Regeleinheit hinterlegt. Ein Gasspektrum kann entweder allgemein aus den oberen und unteren Grenzwerten in Deutschland, dem europäischen Raum oder individuell durch Messungen über einen längeren Zeitraum bestimmt werden. Der Eingangsvolumenstrom des Erdgases wird durch die Regeleinheit derart geregelt, dass der Volumenstrom und/oder Massenstrom am Ausgang der Reformereinheit und/oder zumindest der Volumenstrom und/oder Massenstrom am Anodenausgang der Brennstoffzelleneinheit zumindest im Wesentlichen konstant ist und zumindest im Wesentlichen dem jeweiligen Referenzwert entspricht.

Durch eine derartige Ausgestaltung kann eine gattungsgemäße Brennstoffzellenvorrichtung mit verbesserten Betriebseigenschaften bereitgestellt werden. Insbesondere können Schwankungen einer Erdgaszusammensetzung vorteilhaft einfach zumindest weitgehend kompensiert werden. Hierdurch kann vorteilhaft auch bei schwankender Erdgaszusammensetzung eine deutliche Minimierung der Abweichungen zwischen Soll- und Istwert von charakteristischen Kenngrößen der Brennstoffzellenvorrichtung, wie dem Sauerstoff-zu-Kohlenstoff-Verhältnis in der Reformereinheit und dem Brennstoffnutzungsgrad, erreicht werden. Durch die Einhaltung des Sauerstoff-zu-Kohlenstoff-Verhältnisses in der Reformereinheit kann die Gefahr von Kohlenstoffablagerungen minimiert werden. Zusätzlich kann die Gefahr von Brennstoffverarmungen in der Brennstoffzelleneinheit durch die Reduktion der Abweichungen des Brennstoffnutzungsgrades beschränkt werden.

Des Weiteren wird vorgeschlagen, dass die Regeleinheit zumindest ein Regelventil aufweist, welches zu einer Einstellung des Eintrittsvolumenstroms und/oder Eintrittsmassenstroms des Erdgases in Abhängigkeit von dem Volumenstrom und/oder Massenstrom am Ausgang der Reformereinheit und/oder dem Volumenstrom und/oder Massenstrom am Anodenausgang der Brennstoffzelleneinheit vorgesehen ist. Insbesondere kann das Regelventil als ein insbesondere elektromagnetisches und/oder elektromotorisches Proportionalventil ausgebildet sein. Insbesondere ist das Regelventil der Reformereinheit, strömungstechnisch vorgeschaltet. Das Regelventil ist in Abhängigkeit von dem Volumenstrom und/oder Massenstrom am Ausgang der Reformereinheit und/oder dem Volumenstrom und/oder Massenstrom am Anodenausgang der Brennstoffzelleneinheit mittelbar und/oder unmittelbar durch die Regeleinheit ansteuerbar. Insbesondere ist das Regelventil durch die Regeleinheit derart ansteuerbar, dass der Volumenstrom und/oder Massenstrom am Ausgang der Reformereinheit und/oder der Volumenstrom und/oder Massenstrom am Anodenausgang der Brennstoffzelleneinheit zumindest im Wesentlichen konstant bleibt. Hierdurch kann eine vorteilhaft einfache Einstellung des Eintrittsvolumenstroms und/oder Eintrittsmassenstroms des Erdgases ermöglicht werden.

Zudem wird vorgeschlagen, dass die Regeleinheit zumindest einen Durchflussmesser aufweist, welcher dazu vorgesehen ist, den Volumenstrom und/oder Massenstrom am Ausgang der Reformereinheit zu erfassen. Insbesondere ist der Durchflussmesser dazu vorgesehen, während eines Betriebs der Brennstoffzellenvorrichtung einen Volumenstrom und/oder Massenstrom eines aus der Reformereinheit ausströmenden Reformats zu erfassen. Der Durchflussmesser ist insbesondere dazu vorgesehen, den Volumenstrom und/oder Massenstrom des aus der Reformereinheit ausströmenden Reformats kontinuierlich oder quasikontinuierlich zu erfassen. Der Durchflussmesser ist insbesondere dazu vorgesehen, erfasste Durchflusswerte kontinuierlich oder quasikontinuierlich an eine Regelelektronik der Regeleinheit zu übermitteln. Hierdurch kann der Volumenstrom und/oder Massenstrom am Ausgang der Reformereinheit vorteilhaft einfach und/oder zuverlässig als Größe für eine Regelung des Eintrittsvolumenstroms und/oder Eintrittsmassenstroms des Erdgases erfasst werden.

In einer Ausgestaltung der Erfindung wird vorgeschlagen, dass die Regeleinheit zumindest einen Durchflussmesser aufweist, welcher dazu vorgesehen ist, den Volumenstrom und/oder Massenstrom am Anodenausgang der Brennstoffzelleneinheit zu erfassen. Insbesondere ist der Durchflussmesser dazu vorgesehen, während eines Betriebs der Brennstoffzellenvorrichtung einen Volumenstrom und/oder Massenstrom eines aus der Anode der Brennstoffzelleneinheit ausströmenden Anodenabgases zu erfassen. Der Durchflussmesser ist insbesondere dazu vorgesehen, den Volumenstrom und/oder Massenstrom des aus der Anode der Brennstoffzelleneinheit ausströmenden Anodenabgases kontinuierlich oder quasikontinuierlich zu erfassen. Der Durchflussmesser ist insbesondere dazu vorgesehen, erfasste Durchflusswerte kontinuierlich oder quasikontinuierlich an eine Regelelektronik der Regeleinheit zu übermitteln. Hierdurch kann der Volumenstrom und/oder Massenstrom am Anodenausgang der Brennstoffzelleneinheit vorteilhaft einfach und/oder zuverlässig als Größe für eine Regelung des Eintrittsvolumenstroms und/oder Eintrittsmassenstroms des Erdgases erfasst werden.

Ferner wird vorgeschlagen, dass die Brennstoffzellenvorrichtung einen Rezirkulationskreis aufweist, welcher zu einer Rückführung eines Anodenabgases der Brennstoffzelleneinheit zu einer zumindest teilweisen Vermischung mit dem Erdgas vorgesehen ist, wobei die Regeleinheit dazu vorgesehen ist, eine Rezirkulationsrate zumindest im Wesentlichen konstant zu halten. Alternativ oder zusätzlich kann die Regeleinheit dazu vorgesehen sein, einen Volumen- und/oder Massenstrom im Rezikulationskreis oder einem Eingang der Reformereinheit zumindest im Wesentlichen konstant zu halten. Unter einem "Rezirkulationskreis" soll in diesem Zusammenhang insbesondere eine Verbindungseinheit verstanden werden, die zu einem Transport von insbesondere flüssigen und/oder gasförmigen Stoffen und/oder Stoffgemischen vorgesehen ist. Insbesondere umfasst der Rezirkulationskreis zumindest eine Hohlleitung, beispielsweise zumindest eine Rohr- und/oder Schlauchleitung. Der Rezirkulationskreis ist insbesondere dazu vorgesehen, der Reformereinheit einen insbesondere festgelegten Prozentsatz eines, insbesondere Wasserstoff- und/oder wasserdampfhaltigen, Abgases der Brennstoffzelle, insbesondere eines Anodenabgases, zuzuführen. Unter einer "Rezirkulationsrate" soll in diesem Zusammenhang insbesondere ein Verhältnis zwischen einem Rezirkulationsvolumenstrom und einem Anodenabgasvolumenstrom verstanden werden. Vorzugsweise weist die Regeleinheit zumindest einen Durchflussmesser auf, welcher dazu vorgesehen ist, insbesondere kontinuierlich oder quasikontinuierlich einen Volumenstrom und/oder Massenstrom innerhalb des Rezirkulationskreises zu erfassen. Hierdurch kann eine vorteilhafte Regelung des Eintrittsvolumenstroms und/oder Eintrittsmassenstroms des Erdgases erreicht werden.

Zudem wird ein Brennstoffzellensystem mit zumindest einer erfindungsgemäßen Brennstoffzellenvorrichtung vorgeschlagen. Neben der Brennstoffzellenvorrichtung kann das Brennstoffzellensystem insbesondere eine Entschwefelungseinheit umfassen. Unter einer "Entschwefelungseinheit" soll in diesem Zusammenhang insbesondere eine Einheit verstanden werden, welche dazu vorgesehen ist, vorzugsweise durch zumindest ein physikalisches und/oder chemisches Adsorptionsverfahren und/oder Absorptionsverfahren, einen Volumen- oder Molanteil an Schwefelverbindungen in dem fluidischen Brennstoff unter einen festgelegten Grenzwert zu senken und vorzugsweise zumindest im Wesentlichen aus dem fluidischen Brennstoff zu entfernen. Ferner kann das Brennstoffzellensystem eine Mehrzahl von Wärmeübertragern aufweisen, welche zu einer Temperierung von Prozessgasen vorgesehen sind. Unter einem "Wärmeübertrager" soll in diesem Zusammenhang insbesondere eine Einheit verstanden werden, welche dazu vorgesehen ist, Wärme in Richtung eines Temperaturgefälles zwischen zumindest zwei insbesondere fluiden Stoffströmen zu übertragen, insbesondere in einem Gegenstrombetrieb, Kreuzstrombetrieb und/oder Gleichstromprinzip. Hierdurch kann ein Brennstoffzellensystem mit vorteilhaften Betriebseigenschaften bereitgestellt werden.

Ferner wird ein Verfahren zum Betrieb einer Brennstoffzellenvorrichtung vorgeschlagen, welche dazu vorgesehen ist, mit einem Erdgas betrieben zu werden, mit einer Brennstoffzelleneinheit und mit einer Reformereinheit, welche dazu vorgesehen ist, das Erdgas zumindest teilweise zu reformieren, wobei ein Eintrittsvolumenstrom und/oder Eintrittsmassenstrom des Erdgases in Abhängigkeit von zumindest einem Volumenstrom und/oder Massenstrom an einem Ausgang der Reformereinheit und/oder zumindest einem Volumenstrom und/oder Massenstrom an einem Anodenausgang der Brennstoffzelleneinheit geregelt wird. Vorzugsweise wird der Eintrittsvolumenstrom und/oder Eintrittsmassenstrom des Erdgases derart geregelt, dass der Volumenstrom und/oder Massenstrom am Ausgang der Reformereinheit und/oder der Volumenstrom und/oder Massenstrom am Anodenausgang der Brennstoffzelleneinheit zumindest im Wesentlichen konstant gehalten werden. Hierdurch können Schwankungen einer Erdgaszusammensetzung vorteilhaft einfach zumindest weitgehend kompensiert werden. Insbesondere kann vorteilhaft auch bei schwankender Erdgaszusammensetzung eine deutliche Minimierung der Abweichungen zwischen Soll- und Istwert von charakteristischen Kenngrößen der Brennstoffzellenvorrichtung, wie dem Sauerstoff-zu-Kohlenstoff-Verhältnis in der Reformereinheit und dem Brennstoffnutzungsgrad, erreicht werden. Durch die Einhaltung des Sauerstoff-zu-Kohlenstoff-Verhältnis in der Reformereinheit kann die Gefahr von Kohlenstoffablagerungen minimiert werden. Zusätzlich kann die Gefahr von Brennstoffverarmungen in der Brennstoffzelleneinheit durch die Reduktion der Abweichungen des Brennstoffnutzungsgrades beschränkt werden.

Die erfindungsgemäße Brennstoffzellenvorrichtung soll hierbei nicht auf die oben beschriebene Anwendung und Ausführungsform beschränkt sein. Insbesondere kann die erfindungsgemäße Brennstoffzellenvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Brennstoffzellensystems mit einer Regeleinheit zur Regelung eines Eintrittsvolumenstroms und/oder Eintrittsmassenstroms eines Erdgases in Abhängigkeit von einem Volumenstrom und/oder Massenstrom an einem Ausgang einer Reformereinheit und
- Fig. 2: eine schematische Darstellung eines Brennstoffzellensystems mit einer Regeleinheit zur Regelung eines Eintrittsvolumenstroms und/oder Eintrittsmassenstroms eines Erdgases in Abhängigkeit von einem Volumenstrom und/oder Massenstrom an einem Anodenausgang einer Brennstoffzelleneinheit.

### Beschreibung der Ausführungsbeispiele

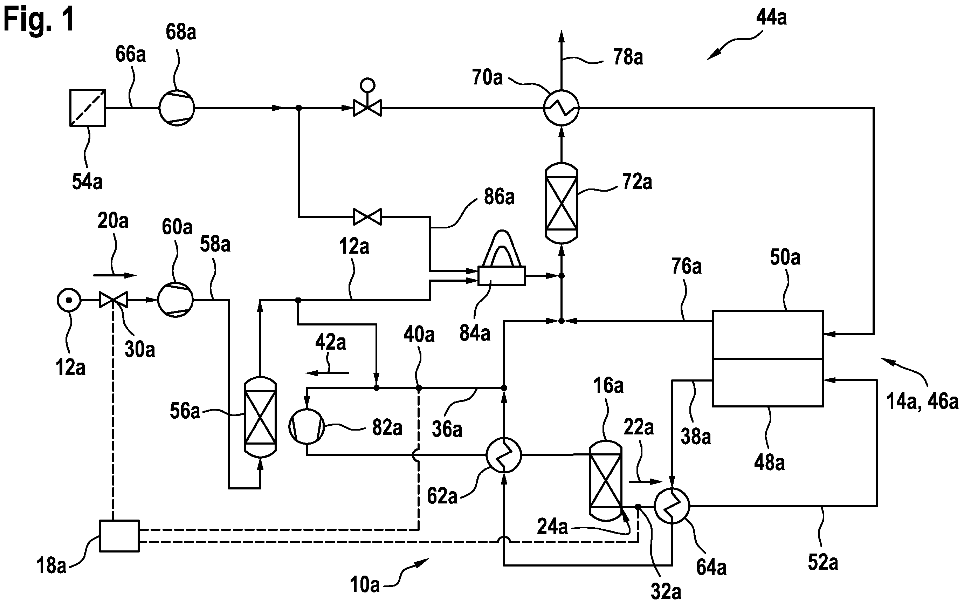

Figur 1 zeigt eine schematische Darstellung eines Brennstoffzellensystems 44a mit einer Brennstoffzellenvorrichtung 10a. Die Brennstoffzellenvorrichtung 10a ist dazu vorgesehen, mit einem Erdgas 12a betrieben zu werden. Die Brennstoffzellenvorrichtung 10a weist eine Brennstoffzelleneinheit 14a auf. Ferner weist die Brennstoffzellenvorrichtung 10a eine Reformereinheit 16a auf, welche dazu vorgesehen ist, das Erdgas 12a zumindest teilweise zu reformieren. Die Brennstoffzelleneinheit 14a ist hier vereinfacht als eine Brennstoffzelle 46a dargestellt. Zweckmäßig ist jedoch eine Ausbildung einer Brennstoffzelleneinheit als ein Brennstoffzellenstack mit einer Vielzahl von Brennstoffzellen. Die Brennstoffzelleneinheit 14a weist eine Anode 48a und eine Kathode 50a auf. Der Anode 48a wird während eines Betriebs der Brennstoffzelleneinheit 14a ein aus dem Erdgas 12a gewonnenes Reformat 52a zugeführt. Der Kathode 50a wird während eines Betriebs der Brennstoffzelleneinheit 14a ein Kathodengas 54a, insbesondere Luftsauerstoff, zugeführt. Ferner weist die Brennstoffzellenvorrichtung 10a eine der Brennstoffzelleneinheit 14a strömungstechnisch vorgeschaltete Entschwefelungseinheit 56a auf. Die Entschwefelungseinheit 56a ist dazu vorgesehen, das Erdgas 12a zumindest teilweise zu entschwefeln. Die Reformereinheit 16a ist der Entschwefelungseinheit 56a strömungstechnisch nachgeschaltet.

Das Erdgas 12a wird während eines Betriebs der Brennstoffzelleneinheit 14a über eine Versorgungsleitung 58a in das Brennstoffzellensystem 44a eingespeist. Das Erdgas 12a wird mittels eines Verdichters 60a gefördert. Vor Eintritt in die Reformereinheit 16a wird das entschwefelte Erdgas 12a mittels eines Wärmeübertragers 62a auf eine Prozesstemperatur erwärmt. Das aus der Reformereinheit 16a austretende Reformat 52a wird vor Eintritt in die Anode 48a der Brennstoffzelleneinheit 14a mittels eines weiteren Wärmeübertragers 64a temperiert. Das Kathodengas 54a wird über eine weitere Versorgungsleitung 66a in das Brennstoffzellensystem 44a eingespeist. Das Kathodengas 54a wird mittels eines Verdichters 68a gefördert. Vor Eintritt in die Kathode 50a der Brennstoffzelleneinheit 14a wird das Kathodengas 54a mittels eines weiteren Wärmeübertragers 70a erwärmt.

Ferner weist die Brennstoffzellenvorrichtung 10a einen Nachbrenner 72a auf. Der Nachbrenner 72a ist der Brennstoffzelleneinheit 14a strömungstechnisch nachgeschaltet. Dem Nachbrenner 72a wird ein Teil eines Anodenabgases 38a der Brennstoffzelleneinheit 14a zugeführt. Der Nachbrenner 72a ist dazu vorgesehen, in dem Anodenabgas 38a der Brennstoffzelleneinheit 14a verbliebene brennbare Stoffe, insbesondere nicht umgesetzten Wasserstoff, zu verbrennen. Ein für einen Betrieb des Nachbrenners 72a benötigter Sauerstoff wird dem Nachbrenner 72a in Form eines Kathodenabgases 76a der Brennstoffzelleneinheit 14a zugeführt. Ein Abgas 78a des Nachbrenners 72a wird aus dem Brennstoffzellensystem 44a ausgeleitet. Die Brennstoffzellenvorrichtung 10a weist ferner einen Rezirkulationskreis 36a auf, welcher zu einer teilweisen Rezirkulation des wasserstoff- und wasserhaltigen Anodenabgases 38a der Brennstoffzelleneinheit 14a vorgesehen ist. Der Rezirkulationskreis 36a ist insbesondere dazu vorgesehen, das Anodenabgas 38a der Brennstoffzelleneinheit 14a zumindest teilweise zur Vermischung mit dem Erdgas 12a zurückzuführen. Ferner ist ein Verdichter 82a in dem Rezirkulationskreis 36a angeordnet. Durch die Rezirkulation eines Anodenabgases 38a kann Wasserdampf aus einem Reaktionsvorgang in der Brennstoffzelleneinheit 14a zur Reformierung des Erdgases 12a innerhalb der Reformereinheit 16a verwendet werden. Ferner kann nicht umgesetzter Wasserstoff in die Brennstoffzelleneinheit 14a zurückgeführt werden, wodurch ein Brennstoffnutzungsgrad erhöht werden kann. Des Weiteren weist die Brennstoffzellenvorrichtung 10a einen Startbrenner 84a auf. Während eines Hochfahrens der Brennstoffzelleneinheit 14a wird das Erdgas 12a und Luft 86a dem Startbrenner 84a, welcher dazu vorgesehen ist, das Kathodengas 54a während des Hochfahrens aufzuheizen, zugeführt. Über das aufgeheizte Kathodengas 54a wird die Brennstoffzellenvorrichtung 10a, insbesondere die Brennstoffzelleneinheit 14a, auf eine Betriebstemperatur erwärmt.

Ferner weist die Brennstoffzellenvorrichtung 10a eine Regeleinheit 18a auf, welche dazu vorgesehen ist, einen Eintrittsvolumenstrom und/oder Eintrittsmassenstrom 20a des Erdgases 12a in Abhängigkeit von einem Volumenstrom und/oder Massenstrom 22a an einem Ausgang 24a der Reformereinheit 16a zu regeln. Vorzugsweise ist die die Regeleinheit 18a dazu vorgesehen, den Eintrittsvolumenstrom und/oder Eintrittsmassenstrom 20a des Erdgases 12a derart zu regeln, dass der Volumenstrom und/oder Massenstrom 22a am Ausgang 24a der Reformereinheit 16a zumindest im Wesentlichen konstant ist. Die Regeleinheit 18a weist ein Regelventil 30a auf, welches zu einer Einstellung des Eintrittsvolumenstroms und/oder Eintrittsmassenstroms 20a des Erdgases 12a in Abhängigkeit von dem Volumenstrom und/oder Massenstrom 22a am Ausgang 24a der Reformereinheit 16a vorgesehen ist. Das Regelventil 30a ist mittelbar und/oder unmittelbar durch die Regeleinheit 18a ansteuerbar. Die Regeleinheit 18a weist einen Durchflussmesser 32a auf, welcher dazu vorgesehen ist, den Volumenstrom und/oder Massenstrom 22a, insbesondere einen Volumenstrom und/oder Massenstrom des Reformats 52a, am Ausgang 24a der Reformereinheit 16a zu erfassen. Ferner ist die Regeleinheit 18a dazu vorgesehen, eine Rezirkulationsrate innerhalb des Rezirkulationskreises 36a zumindest im Wesentlichen konstant zu halten. Die Regeleinheit 18a weist einen Durchflussmesser 40a auf, welcher dazu vorgesehen ist, einen Volumenstrom und/oder Massenstrom 42a innerhalb des Rezirkulationskreises 36a zu erfassen. Eine Zusammensetzung des Erdgases 12a kann zeitliche und/oder örtliche Schwankungen aufweisen. Für eine definierte Zusammensetzung des Erdgases 12a sind jeweils Referenzwerte für den Volumenstrom und/oder Massenstrom 22a am Ausgang 24a der Reformereinheit 16a in Abhängigkeit einer Temperatur der Reformereinheit 16a definierbar. Die Referenzwerte sind insbesondere in einer Speichereinheit der Regeleinheit 18a hinterlegt. Der Eintrittsvolumenstrom und/oder Eintrittsmassenstrom 20a des Erdgases 12a wird durch die Regeleinheit 18a derart geregelt, dass der Volumenstrom und/oder Massenstrom 22a am Ausgang 24a der Reformereinheit 16a zumindest im Wesentlichen konstant ist und zumindest im Wesentlichen dem jeweiligen Referenzwert entspricht.

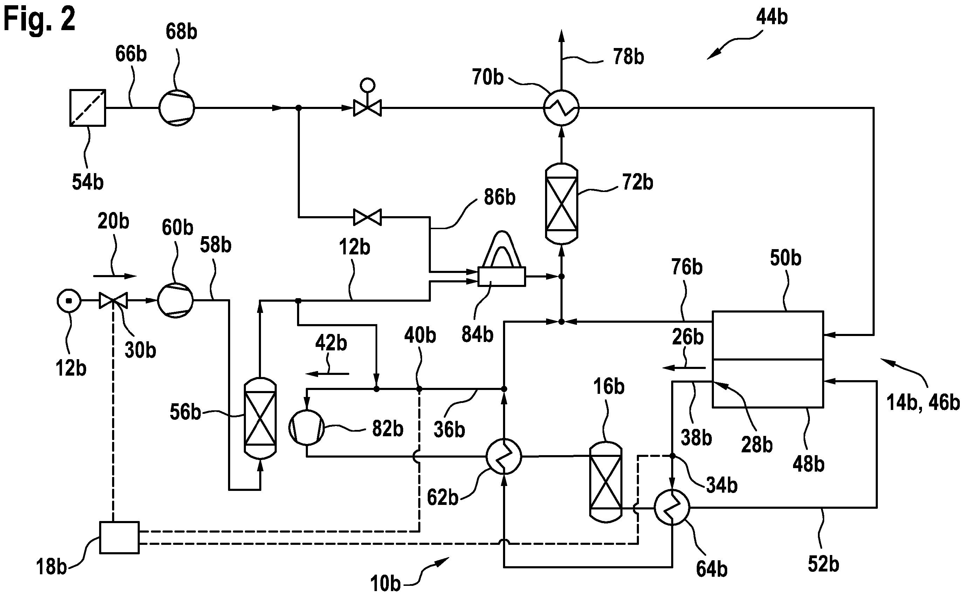

In Figur 2 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnung und/oder die Beschreibung der anderen Ausführungsbeispiele, insbesondere der Figur 1, verwiesen werden kann. Zur Unterscheidung der Ausführungsbeispiele ist der Buchstabe a den Bezugszeichen des Ausführungsbeispiels in Figur 1 nachgestellt. In dem Ausführungsbeispiel der Figur 2 ist der Buchstabe a durch den Buchstaben b ersetzt.

Figur 2 zeigt eine schematische Darstellung eines Brennstoffzellensystems 44b mit einer alternativen Brennstoffzellenvorrichtung 10b. Die Brennstoffzellenvorrichtung 10b ist dazu vorgesehen, mit einem Erdgas 12b betrieben zu werden. Die Brennstoffzellenvorrichtung 10b weist eine Brennstoffzelleneinheit 14b auf. Ferner weist die Brennstoffzellenvorrichtung 10b eine Reformereinheit 16b auf, welche dazu vorgesehen ist, das Erdgas 12b zumindest teilweise zu reformieren.

Die Brennstoffzelleneinheit 14b ist hier vereinfacht als eine Brennstoffzelle 46b dargestellt. Zweckmäßig ist jedoch eine Ausbildung einer Brennstoffzelleneinheit als ein Brennstoffzellenstack mit einer Vielzahl von Brennstoffzellen. Die Brennstoffzelleneinheit 14b weist eine Anode 48b und eine Kathode 50b auf. Der Anode 48b wird während eines Betriebs der Brennstoffzelleneinheit 14b ein aus dem Erdgas 12b gewonnenes Reformat 52b zugeführt. Der Kathode 50b wird während eines Betriebs der Brennstoffzelleneinheit 14b ein Kathodengas 54b, insbesondere Luftsauerstoff, zugeführt. Ferner weist die Brennstoffzellenvorrichtung 10b eine der Brennstoffzelleneinheit 14b strömungstechnisch vorgeschaltete Entschwefelungseinheit 56b auf. Die Entschwefelungseinheit 56b ist dazu vorgesehen, das Erdgas 12b zumindest teilweise zu entschwefeln. Die Reformereinheit 16b ist der Entschwefelungseinheit 56b strömungstechnisch nachgeschaltet.

Das Erdgas 12b wird während eines Betriebs der Brennstoffzelleneinheit 14b über eine Versorgungsleitung 58b in das Brennstoffzellensystem 44b eingespeist. Das Erdgas 12b wird mittels eines Verdichters 60b gefördert. Vor Eintritt in die Reformereinheit 16b wird das entschwefelte Erdgas 12b mittels eines Wärmeübertragers 62b auf eine Prozesstemperatur erwärmt. Das aus der Reformereinheit 16b austretende Reformat 52b wird vor Eintritt in die Anode 48b der Brennstoffzelleneinheit 14b mittels eines weiteren Wärmeübertragers 64b temperiert. Das Kathodengas 54b wird über eine weitere Versorgungsleitung 66b in das Brennstoffzellensystem 44b eingespeist. Das Kathodengas 54b wird mittels eines Verdichters 68b gefördert. Vor Eintritt in die Kathode 54b der Brennstoffzelleneinheit 14b wird das Kathodengas 50b mittels eines weiteren Wärmeübertragers 70b erwärmt.

Ferner weist die Brennstoffzellenvorrichtung 10b einen Nachbrenner 72b auf. Der Nachbrenner 72b ist der Brennstoffzelleneinheit 14b strömungstechnisch nachgeschaltet. Dem Nachbrenner 72b wird ein Teil eines Anodenabgases 38b der Brennstoffzelleneinheit 14b zugeführt. Der Nachbrenner 72b ist dazu vorgesehen, in dem Anodenabgas 38b der Brennstoffzelleneinheit 14b verbliebene brennbare Stoffe, insbesondere nicht umgesetzten Wasserstoff, zu verbrennen. Ein für einen Betrieb des Nachbrenners 72b benötigter Sauerstoff wird dem Nachbrenner 72b in Form eines Kathodenabgases 76b der Brennstoffzelleneinheit 14b zugeführt. Ein Abgas 78b des Nachbrenners 72b wird aus dem Brennstoffzellensystem 44b ausgeleitet. Die Brennstoffzellenvorrichtung 10b weist ferner einen Rezirkulationskreis 36b auf, welcher zu einer teilweisen Rezirkulation des wasserstoff- und wasserhaltigen Anodenabgases 38b der Brennstoffzelleneinheit 14b vorgesehen ist. Der Rezirkulationskreis 36b ist insbesondere dazu vorgesehen, das Anodenabgas 38b der Brennstoffzelleneinheit 14b zumindest teilweise zur Vermischung mit dem Erdgas 12b zurückzuführen. Ferner ist ein Verdichter 82b in dem Rezirkulationskreis 36b angeordnet. Durch die Rezirkulation des Anodenabgases 38b kann Wasserdampf aus einem Reaktionsvorgang in der Brennstoffzelleneinheit 14b zur Reformierung des Erdgases 12b innerhalb der Reformereinheit 16b verwendet werden. Ferner kann nicht umgesetzter Wasserstoff in die Brennstoffzelleneinheit 14b zurückgeführt werden, wodurch ein Brennstoffnutzungsgrad erhöht werden kann. Des Weiteren weist die Brennstoffzellenvorrichtung 10b einen Startbrenner 84b auf. Während eines Hochfahrens der Brennstoffzelleneinheit 14b wird das Erdgas 12b und Luft 86b dem Startbrenner 84b, welcher dazu vorgesehen ist, das Kathodengas 54b während des Hochfahrens aufzuheizen, zugeführt. Über das aufgeheizte Kathodengas 54b wird die Brennstoffzellenvorrichtung 10b, insbesondere die Brennstoffzelleneinheit 14b, auf eine Betriebstemperatur erwärmt.

Ferner weist die Brennstoffzellenvorrichtung 10b eine Regeleinheit 18b auf, welche dazu vorgesehen ist, einen Eintrittsvolumenstrom und/oder Eintrittsmassenstrom 20b des Erdgases 12b in Abhängigkeit von einem Volumenstrom und/oder Massenstrom 26b an einem Anodenausgang 28b der Brennstoffzelleneinheit 14b zu regeln. Vorzugsweise ist die die Regeleinheit 18b dazu vorgesehen, den Eintrittsvolumenstrom und/oder Eintrittsmassenstrom 20b des Erdgases 12b derart zu regeln, dass der Volumenstrom und/oder Massenstrom 26b am Anodenausgang 28b der Brennstoffzelleneinheit 14b zumindest im Wesentlichen konstant ist. Die Regeleinheit 18b weist ein Regelventil 30b auf, welches zu einer Einstellung des Eintrittsvolumenstroms und/oder Eintrittsmassenstroms 20b des Erdgases 12b in Abhängigkeit von dem Volumenstrom und/oder Massenstrom 26b am Anodenausgang 28b der Brennstoffzelleneinheit 14b vorgesehen ist. Das Regelventil 30b ist mittelbar und/oder unmittelbar durch die Regeleinheit 18b ansteuerbar. Die Regeleinheit 18b weist einen Durchflussmesser 34b auf, welcher dazu vorgesehen ist, den Volumenstrom und/oder Massenstrom 26b, insbesondere einen Volumenstrom und/oder Massenstrom des Anodenabgases 38b, am Anodenausgang 28a der Brennstoffzelleneinheit 14a zu erfassen. Ferner ist die Regeleinheit 18b dazu vorgesehen, eine Rezirkulationsrate innerhalb des Rezirkulationskreises 36b zumindest im Wesentlichen konstant zu halten. Die Regeleinheit 18b weist einen Durchflussmesser 40b auf, welcher dazu vorgesehen ist, einen Volumenstrom und/oder Massenstrom 42b innerhalb des Rezirkulationskreises 36b zu erfassen. Eine Zusammensetzung des Erdgases 12b kann zeitliche und/oder örtliche Schwankungen aufweisen. Für eine definierte Zusammensetzung des Erdgases 12b sind jeweils Referenzwerte für den Volumenstrom und/oder Massenstrom 26b am Anodenausgang 28b der Brennstoffzelleneinheit 14b in Abhängigkeit einer Temperatur der Brennstoffzelleneinheit 14b definierbar. Die Referenzwerte sind insbesondere in einer Speichereinheit der Regeleinheit 18b hinterlegt. Der Eingangsvolumenstrom 20b des Erdgases 12b wird durch die Regeleinheit 18b derart geregelt, dass der Volumenstrom und/oder Massenstrom 26b am Anodenausgang 28b der Brennstoffzelleneinheit 14b zumindest im Wesentlichen konstant ist und zumindest im Wesentlichen dem jeweiligen Referenzwert entspricht.

## Patentansprüche

1. Brennstoffzellenvorrichtung, welche dazu vorgesehen ist, mit einem Erdgas (12a; 12b) betrieben zu werden, mit einer Brennstoffzelleneinheit (14a; 14b) und mit einer Reformereinheit (16a; 16b), welche dazu vorgesehen ist, das Erdgas (12a; 12b) zumindest teilweise zu reformieren, **gekennzeichnet durch** eine Regeleinheit (18a; 18b), welche zumindest dazu vorgesehen ist, einen Eintrittsvolumenstrom und/oder Eintrittsmassenstrom (20a; 20b) des Erdgases (12a; 12b) in Abhängigkeit von zumindest einem Volumenstrom und/oder Massenstrom (22a; 22b) an einem Ausgang (24a; 24b) der Reformereinheit (16a; 16b) und/oder zumindest einem Volumenstrom und/oder Massenstrom (26a; 26b) an einem Anodenausgang (28a; 28b) der Brennstoffzelleneinheit (14a; 14b) derart zu regeln, dass der Volumenstrom und/oder Massenstrom (22a; 22b) am Ausgang (24a; 24b) der Reformereinheit (16a; 16b) und/oder zumindest der Volumenstrom und/oder Massenstrom (26a; 26b) am Anodenausgang (28a; 28b) der Brennstoffzelleneinheit (14a; 14b) im Wesentlichen konstant ist.

2. Brennstoffzellenvorrichtung nach Anspruch 1, **dadurch gekennzeichnet, dass** die Regeleinheit (18a; 18b) dazu vorgesehen ist, den Eintrittsvolumenstrom und/oder Eintrittsmassenstrom (20a; 20b) des Erdgases (12a; 12b) derart zu regeln, dass der Volumenstrom und/oder Massenstrom (22a; 22b) am Ausgang (24a; 24b) der Reformereinheit (16a; 16b) und/oder der Volumenstrom und/oder Massenstrom (26a; 26b) am Anodenausgang (28a; 28b) der Brennstoffzelleneinheit (14a; 14b) im Wesentlichen konstant ist.

3. Brennstoffzellenvorrichtung nach Anspruch 1 oder 2, **dadurch gekennzeichnet, dass** die Regeleinheit (18a; 18b) zumindest ein Regelventil (30a; 30b) aufweist, welches zu einer Einstellung des Eintrittsvolumenstroms und/oder Eintrittsmassenstroms (20a; 20b) des Erdgases (12a; 12b) in Abhängigkeit von dem Volumenstrom und/oder Massenstrom (22a; 22b) am Ausgang (24a; 24b) der Reformereinheit (16a; 16b) und/oder dem Volumenstrom und/oder Massenstrom (26a; 26b) am Anodenausgang (28a; 28b) der Brennstoffzelleneinheit (14a; 14b) vorgesehen ist.

4. Brennstoffzellenvorrichtung nach einem der vorhergehenden Ansprüche, **dadurch gekennzeichnet, dass** die Regeleinheit (18a) zumindest einen Durchflussmesser (32a) aufweist, welcher dazu vorgesehen ist, den Volumenstrom und/oder Massenstrom (22a) am Ausgang (24a) der Reformereinheit (16a) zu erfassen.

5. Brennstoffzellenvorrichtung nach einem der vorhergehenden Ansprüche, **dadurch gekennzeichnet, dass** die Regeleinheit (18b) zumindest einen Durchflussmesser (34b) aufweist, welcher dazu vorgesehen ist, den Volumenstrom und/oder Massenstrom (26b) am Anodenausgang (28b) der Brennstoffzelleneinheit (14b) zu erfassen.

6. Brennstoffzellenvorrichtung nach einem der vorhergehenden Ansprüche, **gekennzeichnet durch** einen Rezirkulationskreis (36a; 36b), welcher zu einer Rückführung eines Anodenabgases (38a; 38b) der Brennstoffzelleneinheit (14a; 14b) zu einer zumindest teilweisen Vermischung mit dem Erdgas (12a; 12b) vorgesehen ist, wobei die Regeleinheit (18a; 18b) dazu vorgesehen ist, eine Rezirkulationsrate im Wesentlichen konstant zu halten.

7. Brennstoffzellenvorrichtung nach Anspruch 6, **dadurch gekennzeichnet, dass** die Regeleinheit (18a; 18b) zumindest einen Durchflussmesser (40a; 40b) aufweist, welcher dazu vorgesehen ist, einen Volumenstrom und/oder Massenstrom (42a; 42b) innerhalb des Rezirkulationskreises (36a; 36b) zu erfassen.

8. Brennstoffzellensystem mit zumindest einer Brennstoffzellenvorrichtung (10a; 10b) nach einem der vorhergehenden Ansprüche.

9. Verfahren zum Betrieb einer Brennstoffzellenvorrichtung (10a; 10b), insbesondere nach einem der vorhergehenden Ansprüche, welche dazu vorgesehen ist, mit einem Erdgas (12a; 12b) betrieben zu werden, mit einer Brennstoffzelleneinheit (14a; 14b) und mit einer Reformereinheit (16a; 16b), welche dazu vorgesehen ist, das Erdgas (12a; 12b) zumindest teilweise zu reformieren, **dadurch gekennzeichnet, dass** ein Eintrittsvolumenstrom und/oder Eintrittsmassenstrom (20a; 20b) des Erdgases (12a; 12b) in Abhängigkeit von zumindest einem Volumenstrom und/oder Massenstrom (22a; 22b) an einem Ausgang (24a; 24b) der Reformereinheit (16a; 16b) und/oder zumindest einem Volumenstrom und/oder Massenstrom (26a; 26b) an einem Anodenausgang (28a; 28b) der Brennstoffzelleneinheit (14a; 14b) derart geregelt wird, dass der Volumenstrom und/oder Massenstrom (22a; 22b) am Ausgang (24a; 24b) der Reformereinheit (16a; 16b) und/oder zumindest der Volumenstrom und/oder Massenstrom (26a; 26b) am Anodenausgang (28a; 28b) der Brennstoffzelleneinheit (14a; 14b) im Wesentlichen konstant ist.

10. Verfahren nach Anspruch 9, **dadurch gekennzeichnet, dass** der Eintrittsvolumenstrom und/oder Eintrittsmassenstrom (20a; 20b) des Erdgases (12a; 12b) derart geregelt wird, dass der Volumenstrom und/oder Massenstrom (22a; 22b) am Ausgang (24a; 24b) der Reformereinheit (16a; 16b) und/oder der Volumenstrom und/oder Massenstrom (26a; 26b) am Anodenausgang (28a; 28b) der Brennstoffzelleneinheit (14a; 14b) im Wesentlichen konstant gehalten werden.

## Claims

1. Fuel cell device which is provided for being operated with a natural gas (12a; 12b), having a fuel cell unit (14a; 14b) and having a reformer unit (16a; 16b) which is provided for at least partially reforming the natural gas (12a; 12b), **characterized by** a feedback control unit (18a; 18b) which is at least provided for performing feedback control of an inlet volume flow and/or inlet mass flow (20a; 20b) of the natural gas (12a; 12b) in a manner dependent on at least a volume flow and/or mass flow (22a; 22b) at an outlet (24a; 24b) of the reformer unit (16a; 16b) and/or at least a volume flow and/or mass flow (26a; 26b) at an anode outlet (28a; 28b) of the fuel cell unit (14a; 14b) such that the volume flow and/or mass flow (22a; 22b) at the outlet (24a; 24b) of the reformer unit (16a; 16b) and/or at least the volume flow and/or mass flow (26a; 26b) at the anode outlet (28a; 28b) of the fuel cell unit (14a; 14b) is substantially constant.

2. Fuel cell device according to Claim 1, **characterized in that** the feedback control unit (18a; 18b) is provided for performing feedback control of the inlet volume flow and/or inlet mass flow (20a; 20b) of the natural gas (12a; 12b) such that the volume flow and/or mass flow (22a; 22b) at the outlet (24a; 24b) of the reformer unit (16a; 16b) and/or the volume flow and/or mass flow (26a; 26b) at the anode outlet (28a; 28b) of the fuel cell unit (14a; 14b) is substantially constant.

3. Fuel cell device according to Claim 1 or 2, **characterized in that** the feedback control unit (18a; 18b) has at least one feedback control valve (30a; 30b) which is provided for setting the inlet volume flow and/or inlet mass flow (20a; 20b) of the natural gas (12a; 12b) in a manner dependent on the volume flow and/or mass flow (22a; 22b) at the outlet (24a; 24b) of the reformer unit (16a; 16b) and/or the volume flow and/or mass flow (26a; 26b) at the anode outlet (28a; 28b) of the fuel cell unit (14a; 14b).

4. Fuel cell device according to any of the preceding claims, **characterized in that** the feedback control unit (18a) has at least one throughflow meter (32a) which is provided for detecting the volume flow and/or mass flow (22a) at the outlet (24a) of the reformer unit (16a).

5. Fuel cell device according to any of the preceding claims, **characterized in that** the feedback control unit (18b) has at least one throughflow meter (34b) which is provided for detecting the volume flow and/or mass flow (26b) at the anode outlet (28b) of the fuel cell unit (14b).

6. Fuel cell device according to any of the preceding claims, **characterized by** a recirculation circuit (36a; 36b) which is provided for recirculating an anode exhaust gas (38a; 38b) of the fuel cell unit (14a; 14b) for at least partial mixing with the natural gas (12a; 12b), wherein the feedback control unit (18a; 18b) is provided for keeping a recirculation rate substantially constant.

7. Fuel cell device according to Claim 6, **characterized in that** the feedback control unit (18a; 18b) has at least one throughflow meter (40a; 40b) which is provided for detecting a volume flow and/or mass flow (42a; 42b) within the recirculation circuit (36a; 36b).

8. Fuel cell system having at least one fuel cell device (10a; 10b) according to any of the preceding claims.

9. Method for operating a fuel cell device (10a; 10b), in particular according to any of the preceding claims, which is provided for being operated with a natural gas (12a; 12b), having a fuel cell unit (14a; 14b) and having a reformer unit (16a; 16b) which is provided for at least partially reforming the natural gas (12a; 12b), **characterized in that** feedback control of an inlet volume flow and/or inlet mass flow (20a; 20b) of the natural gas (12a; 12b) is performed in a manner dependent on at least a volume flow and/or mass flow (22a; 22b) at an outlet (24a; 24b) of the reformer unit (16a; 16b) and/or at least a volume flow and/or mass flow (26a; 26b) at an anode outlet (28a; 28b) of the fuel cell unit (14a; 14b) such that the volume flow and/or mass flow (22a; 22b) at the outlet (24a; 24b) of the reformer unit (16a; 16b) and/or at least the volume flow and/or mass flow (26a; 26b) at the anode outlet (28a; 28b) of the fuel cell unit (14a; 14b) is substantially constant.

10. Method according to Claim 9, **characterized in that** feedback control of the inlet volume flow and/or inlet mass flow (20a; 20b) of the natural gas (12a; 12b) is performed such that the volume flow and/or mass flow (22a; 22b) at the outlet (24a; 24b) of the reformer unit (16a; 16b) and/or the volume flow and/or mass flow (26a; 26b) at the anode outlet (28a; 28b) of the fuel cell unit (14a; 14b) are kept substantially constant.

## Revendications

1. Dispositif de pile à combustible, lequel est prévu pour être exploité avec un gaz naturel (12a ; 12b), muni d'une unité de pile à combustible (14a ; 14b) et muni d'une unité de reformeur (16a ; 16b), laquelle est prévue pour reformer au moins partiellement le gaz naturel (12a ; 12b), **caractérisé par** une unité de réglage (18a ; 18b), laquelle est prévue au moins pour régler un flux volumique d'entrée et/ou un flux massique d'entrée (20a ; 20b) du gaz naturel (12a ; 12b) en fonction d'au moins un flux volumique et/ou flux massique (22a ; 22b) au niveau d'une sortie (24a ; 24b) de l'unité de reformeur (16a ; 16b) et/ou d'au moins un flux volumique et/ou flux massique (26a ; 26b) au niveau d'une sortie d'anode (28a ; 28b) de l'unité de pile à combustible (14a ; 14b), de telle sorte que le flux volumique et/ou le flux massique (22a ; 22b) au niveau de la sortie (24a ; 24b) de l'unité de reformeur (16a ; 16b) et/ou au moins le flux volumique et/ou le flux massique (26a ; 26b) au niveau de la sortie d'anode (28a ; 28b) de l'unité de pile à combustible (14a ; 14b) soient essentiellement constants.

2. Dispositif de pile à combustible selon la revendication 1, **caractérisé en ce que** l'unité de réglage (18a ; 18b) est prévue pour régler le flux volumique d'entrée et/ou le flux massique d'entrée (20a ; 20b) du gaz naturel (12a ; 12b) de telle sorte que le flux volumique et/ou le flux massique (22a ; 22b) au niveau de la sortie (24a ; 24b) de l'unité de reformeur (16a ; 16b) et/ou le flux volumique et/ou le flux massique (26a ; 26b) au niveau de la sortie d'anode (28a ; 28b) de l'unité de pile à combustible (14a ; 14b) soient essentiellement constants.

3. Dispositif de pile à combustible selon la revendication 1 ou 2, **caractérisé en ce que** l'unité de réglage (18a ; 18b) comprend au moins une soupape de réglage (30a ; 30b), laquelle est prévue pour un ajustement du flux volumique d'entrée et/ou du flux massique d'entrée (20a ; 20b) du gaz naturel (12a ; 12b) en fonction du flux volumique et/ou du flux massique (22a ; 22b) au niveau de la sortie (24a ; 24b) de l'unité de reformeur (16a ; 16b) et/ou du flux volumique et/ou du flux massique (26a ; 26b) au niveau de la sortie d'anode (28a ; 28b) de l'unité de pile à combustible (14a ; 14b).

4. Dispositif de pile à combustible selon l'une quelconque des revendications précédentes, **caractérisé en ce que** l'unité de réglage (18a) comprend au moins un débitmètre (32a), lequel est prévu pour déterminer le flux volumique et/ou le flux massique (22a) au niveau de la sortie (24a) de l'unité de reformeur (16a).

5. Dispositif de pile à combustible selon l'une quelconque des revendications précédentes, **caractérisé en ce que** l'unité de réglage (18b) comprend au moins un débitmètre (34b), lequel est prévu pour déterminer le flux volumique et/ou le flux massique (26b) au niveau de la sortie d'anode (28b) de l'unité de pile à combustible (14b).

6. Dispositif de pile à combustible selon l'une quelconque des revendications précédentes, **caractérisé par** un circuit de recirculation (36a ; 36b), lequel est prévu pour un recyclage d'un gaz d'échappement d'anode (38a ; 38b) de l'unité de pile à combustible (14a ; 14b) pour un mélange au moins partiel avec le gaz naturel (12a ; 12b), l'unité de réglage (18a ; 18b) étant prévue pour maintenir un taux de recirculation essentiellement constant.

7. Dispositif de pile à combustible selon la revendication 6, **caractérisé en ce que** l'unité de réglage (18a ; 18b) comprend au moins un débitmètre (40a ; 40b), lequel est prévu pour déterminer un flux volumique et/ou un flux massique (42a ; 42b) au sein du circuit de recirculation (36a ; 36b).

8. Système de pile à combustible muni d'au moins un dispositif de pile à combustible (10a ; 10b) selon l'une quelconque des revendications précédentes.

9. Procédé d'exploitation d'un dispositif de pile à combustible (10a ; 10b), notamment selon l'une quelconque des revendications précédentes, lequel est prévu pour être exploité avec un gaz naturel (12a ; 12b), muni d'une unité de pile à combustible (14a ; 14b) et muni d'une unité de reformeur (16a ; 16b), laquelle est prévue pour reformer au moins partiellement le gaz naturel (12a ; 12b), **caractérisé en ce qu'**un flux volumique d'entrée et/ou un flux massique d'entrée (20a ; 20b) du gaz naturel (12a ; 12b) sont réglés en fonction d'au moins un flux volumique et/ou flux massique (22a ; 22b) au niveau d'une sortie (24a ; 24b) de l'unité de reformeur (16a ; 16b) et/ou d'au moins un flux volumique et/ou flux massique (26a ; 26b) au niveau d'une sortie d'anode (28a ; 28b) de l'unité de pile à combustible (14a ; 14b), de telle sorte que le flux volumique et/ou le flux massique (22a ; 22b) au niveau de la sortie (24a ; 24b) de l'unité de reformeur (16a ; 16b) et/ou au moins le flux volumique et/ou le flux massique (26a ; 26b) au niveau de la sortie d'anode (28a ; 28b) de l'unité de pile à combustible (14a ; 14b) soient essentiellement constants.

10. Procédé selon la revendication 9, **caractérisé en ce que** le flux volumique d'entrée et/ou le flux massique d'entrée (20a ; 20b) du gaz naturel (12a ; 12b) sont réglés de telle sorte que le flux volumique et/ou le flux massique (22a ; 22b) au niveau de la sortie (24a ; 24b) de l'unité de reformeur (16a ; 16b) et/ou le flux volumique et/ou le flux massique (26a ; 26b) au niveau de la sortie d'anode (28a ; 28b) de l'unité de pile à combustible (14a ; 14b) soient maintenus essentiellement constants.
